# EUROPEAN PATENT APPLICATION

(11) **EP 4 672 543 A1**
(43) Date of publication of application: **31.12.2025**
(21) Application number: 24184442.2
(22) Date of filing: 25.06.2024
(51) Int. Cl.: H02J 7/00, B60L 53/66

(54) **A POWER SUPPLY**

(71) Applicant: AutoStore Technology AS, 5578 Nedre Vats (NO)
(72) Inventor: Strømme, Erik, 5578 Nedre Vats (NO)
(74) Representative: Kilburn & Strode LLP

(57) **Abstract**

The disclosure relates to a method of supplying power to a first container handling vehicle and a second container handling vehicle using a single power supply unit. The method includes receiving at a controller a request to charge the first vehicle and a request to charge the second vehicle. The controller causes the first container handling vehicle to be charged according to a first profile. In response to receiving the request to charge the second vehicle, the controller causes the first container handling vehicle to be charged according to a modified profile, and the second container handling vehicle to be charged according to a second charging profile.

## Description

### TECHNICAL FIELD

The disclosure relates to a power supply. More particularly, it relates to methods and systems for supplying power to multiple container handling vehicles.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container handling vehicles may include an onboard power supply in the form of a battery. From time to time, the batteries require charging so that the container handling vehicles may continue to perform their function of moving containers in an automated storage and retrieval system, ASRS.

Chargers may be provided at a location or locations in the ASRS so that container handling vehicles may move to a charging location and charge their batteries without human intervention. A power supply for providing electrical current is combined with a charging port for interfacing with a container handling vehicle. The power supply may be rated so that it can supply the full current required to charge the connected container handling vehicle. Where multiple container handling vehicles are to be charged simultaneously, multiple chargers each having a corresponding power supply may be used, or a power supply having capacity for multiple chargers may be used. The power supply will be required to provide enough power to charge each and every container handling vehicle connected to a charger.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a top view schematic of a charger and an ASRS according to the disclosure;
Fig. 6 shows the charger and ASRS of Fig. 5 including container handling vehicles;
Fig. 7 shows the charger and ASRS of Fig. 5 including container handling vehicles;
Fig. 8 shows the charger and ASRS of Fig. 5 including container handling vehicles;
Fig. 9 shows the charger and ASRS of Fig. 5 including container handling vehicles;
Fig. 10 shows an alternative charger and an ASRS according to the disclosure;
Fig. 11 shows an alternative charger and an ASRS according to the disclosure;
Fig. 12 shows a charging profile according to the disclosure;
Fig. 13 shows modified charging profiles according to the disclosure;
Fig. 14 shows a flow chart indicating steps of a method of charging

### DETAILED DESCRIPTION

In overview, the disclosure relates to charging multiple container handling vehicles using a single power supply unit. The power supply itself may be configured so that it can provide enough current to quickly charge a single container handling vehicle. However, two or more container handling vehicles may be charged simultaneously by modifying the charging profile of the first container handling vehicle and allowing the second container handling vehicle to begin charging at the same time. The system may be managed by receiving requests to charge the container handling vehicles. Should the second request to charge a container handling vehicle overlap with the charging of the first container handling vehicle, the charging profile may be modified to allow both container handling vehicles to charge simultaneously without overloading the power supply. Operating the charging in this way allows for multiple container handling vehicles to be charged without requiring the power supply to react to unknown power draw.

### Automated storage and retrieval system overview

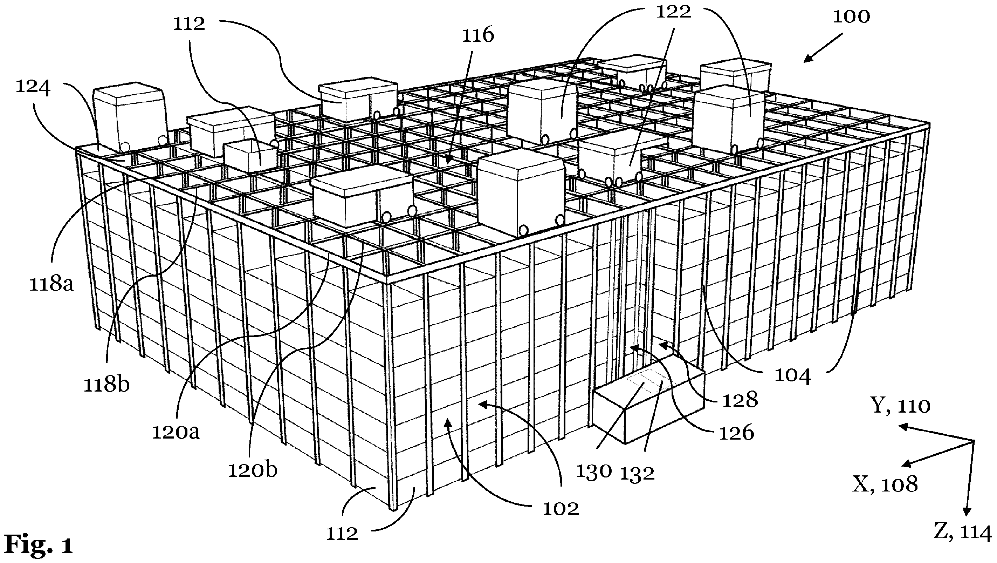

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

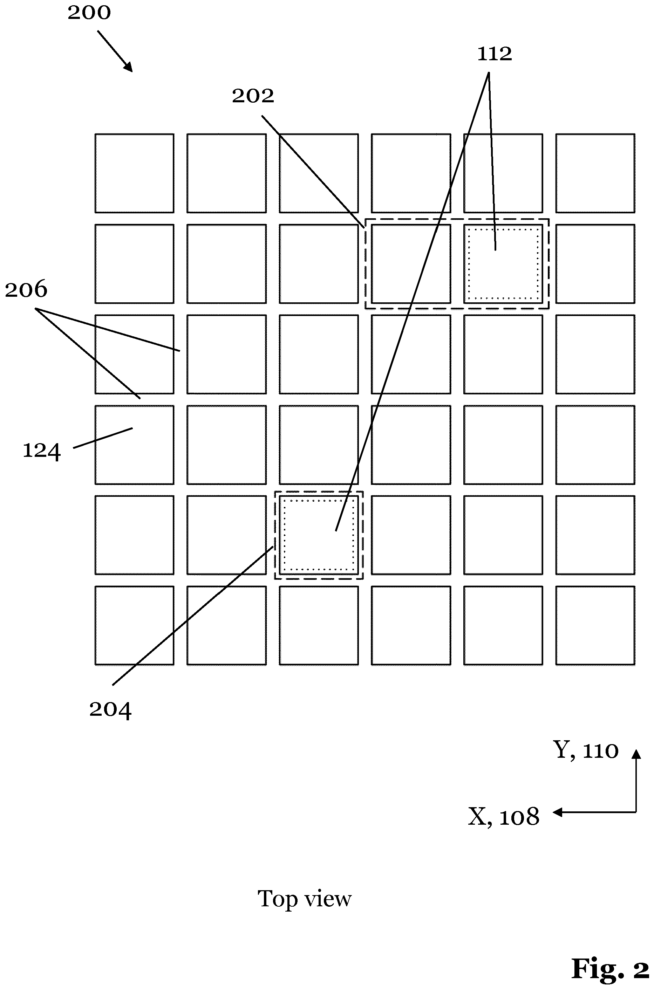

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

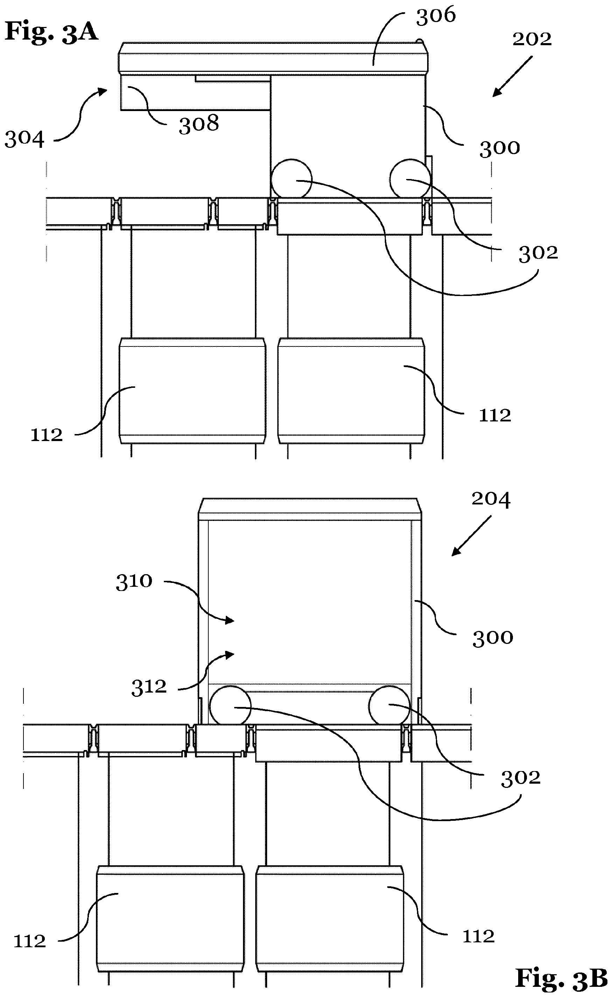

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

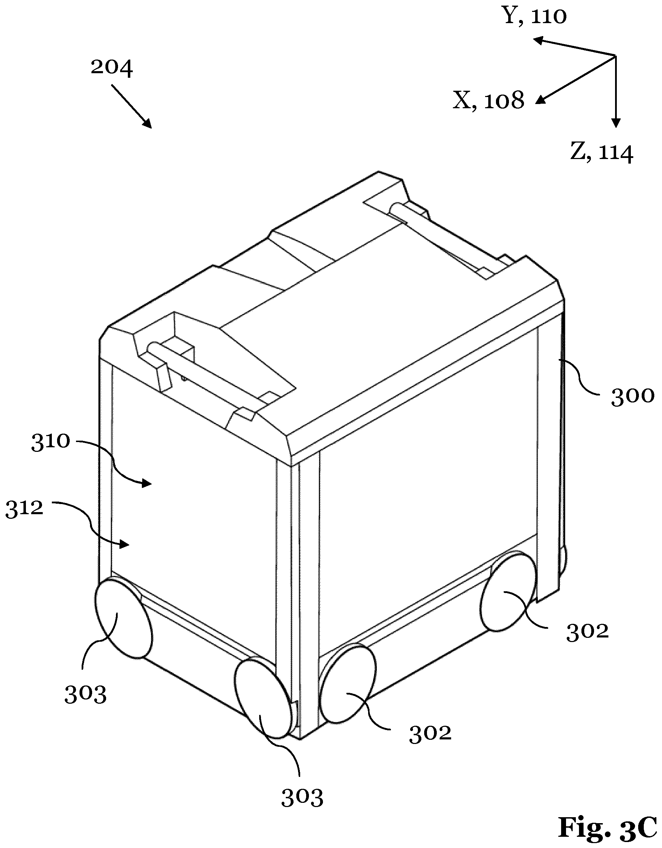

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

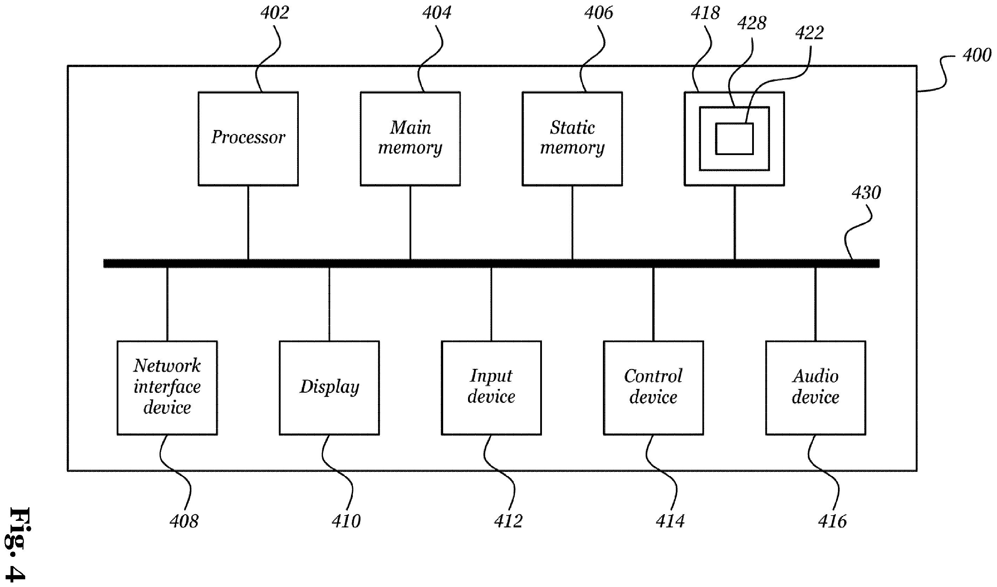

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term `computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Charging the robots

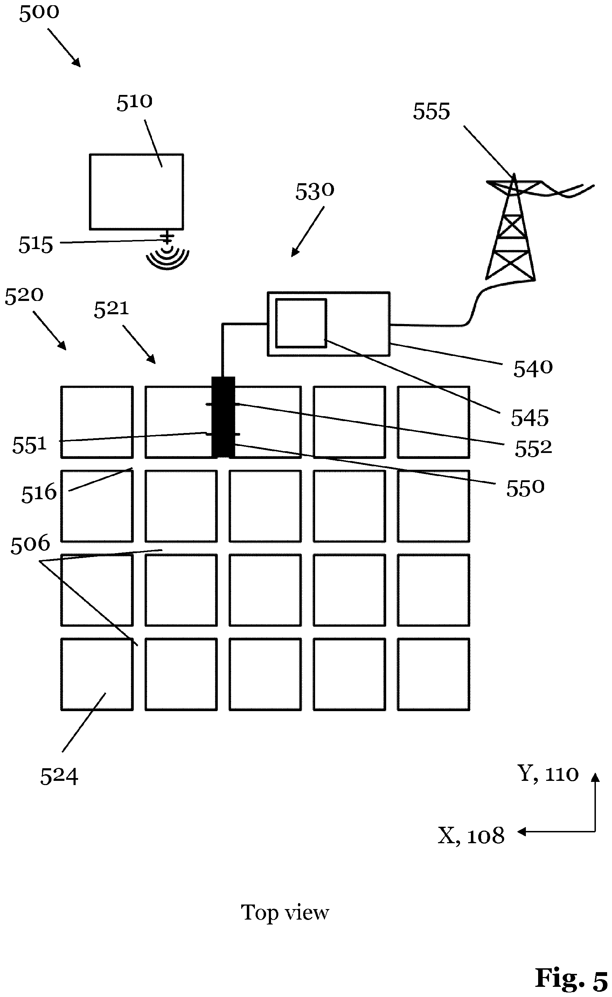

The robots 202, 204 or container handling vehicles as they will be described interchangeably, require being charged from time to time so that they may continue to operate and carry out other useful tasks such as digging or retrieving bins. One option for charging a container handling vehicle is to provide a location that the container handling vehicle can move to where it may be engaged with electrical contacts to provide a charging current. The electrical contacts for charging may be located at a specific cell of the grid, a separate location away from the main grid itself, or at the edge of the grid. Fig. 5 shows a schematic of an example charger according to the disclosure. The automated storage and retrieval system 500 includes a processing system 510 including a communication interface 515 for communicating with container handling vehicles. The grid 520 has an X-Y configuration and a rail system 516 as described with reference to Fig. 2. The rail system includes rails 506 defining between them vertical column access openings 524 for access to bins.

At a first location 521 there is located a power supply unit 530. The power supply unit 530 includes an electrical supply unit 540 and a connector unit 550. The electrical supply unit 540 includes electrical components to convert an electrical input from an external power source 555 such as the grid electricity supply into an electrical output suitable for charging a container handling vehicle at the connector unit 550. For example, the electrical supply unit 540 may convert an AC high voltage electrical supply to a DC electrical supply at lower voltage to match the required operating voltage of the batteries of the container handling vehicles. The electrical supply unit 540 also includes a power controller 545 configured to control the electrical output to regulate the charging of the container handling vehicles. For example, the power controller 545 may include power control to regulate the charging current, the charging voltage, and to provide suitable charging profiles. The connector unit 550 includes a first connector 551 and a second connector 552. Whilst the first connector 551 and the second connector 552 are shown on opposite sides of the connector unit 550, it will be appreciated that many configurations of the connector unit 550 are possible that will allow access to the connector unit 550 for container handling vehicles simultaneously. The power controller 545 may be configured to operate independently from the processing system 510, or it may be configured to communicate with the processing system 510 via the communication interface 515. The power controller 545 may include its own communication interface (not shown) to allow the power controller 545 to communicate with container handling vehicles on the grid 520 and/or with the processing system 510. Requests for charging may be received at either the power controller 545 or at the processing system 510 which may then communicate with the power controller 545 to adjust the supply of power to connectors 551, 552 accordingly.

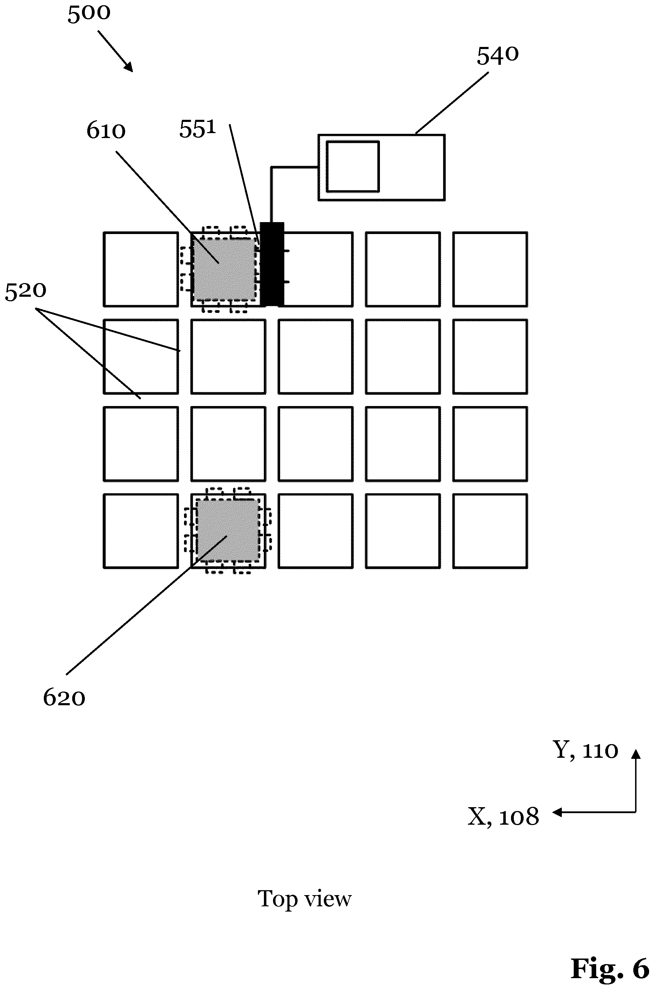

For clarity, the ASRS 500 shown in Fig. 6 does not show the processing system 510 or external power source 555. However, the ASRS 500 in Fig. 6 may still include these components. Fig. 6 shows a first container handling vehicle 610 and a second container handling vehicle 620 on the grid 520. The first container handling vehicle 610 is already at a first location where it may be charged using the first connector 551 of the connector unit 550. The second container handling vehicle 620 is elsewhere on the grid 520, but at some point whilst the first container handling vehicle 610 is still charging, the second container handling vehicle 620 may reach a battery level at which it is sensible to recharge. For example, the second container handling vehicle 620 may have reached a low level of battery charge at which it may no longer effectively complete storage and retrieval tasks on the grid, it may need to travel at lower speeds in order to prevent total loss of battery charge whilst on the grid, or it may be an opportune moment to charge the second container handling vehicle 620 because there is a lower level of vehicle utilisation for a time period. For example, when there is natural ebb and flow of tasks to be completed on the grid 520, downtime may be used for charging the second container handling vehicle 620.

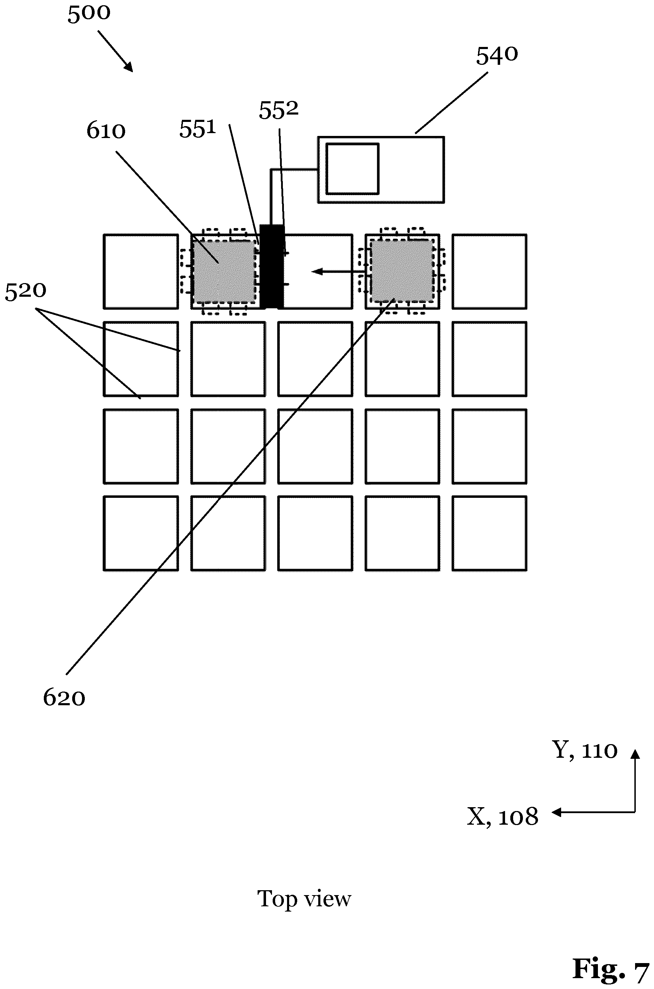

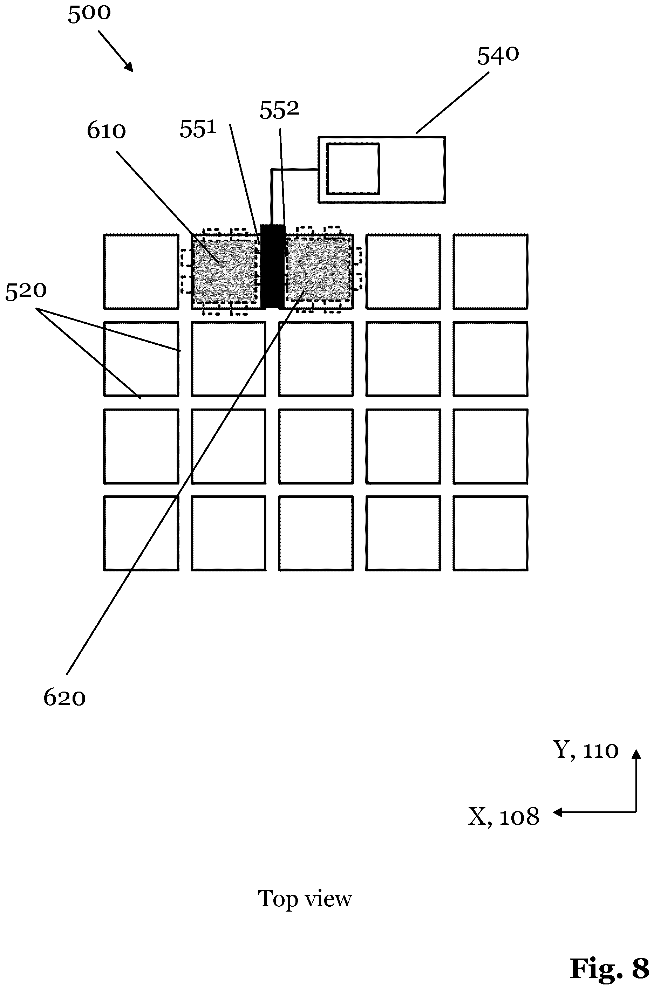

Turning to Fig. 7, the second container handling vehicle 620 may approach the second connector 552 of the connector unit 550 which currently does not have a container handling vehicle present. A request for charging the second container handling vehicle 620 may be made. The request may be sent by the second container handling vehicle 620 itself, or it may be sent by the processing system 510. The request may be received by the power controller 545 so that the charging profiles may be modified accordingly. As shown in Fig. 8 both container handling vehicles 610, 620 may be connected to the connector unit 550 at the same time. Both container handling vehicles 610, 620 are receiving a charging current simultaneously. However, the charging profile of the first container handling vehicle 610 is modified relative to how the power would have been supplied if the request for charging the second container handling vehicle had not been made.

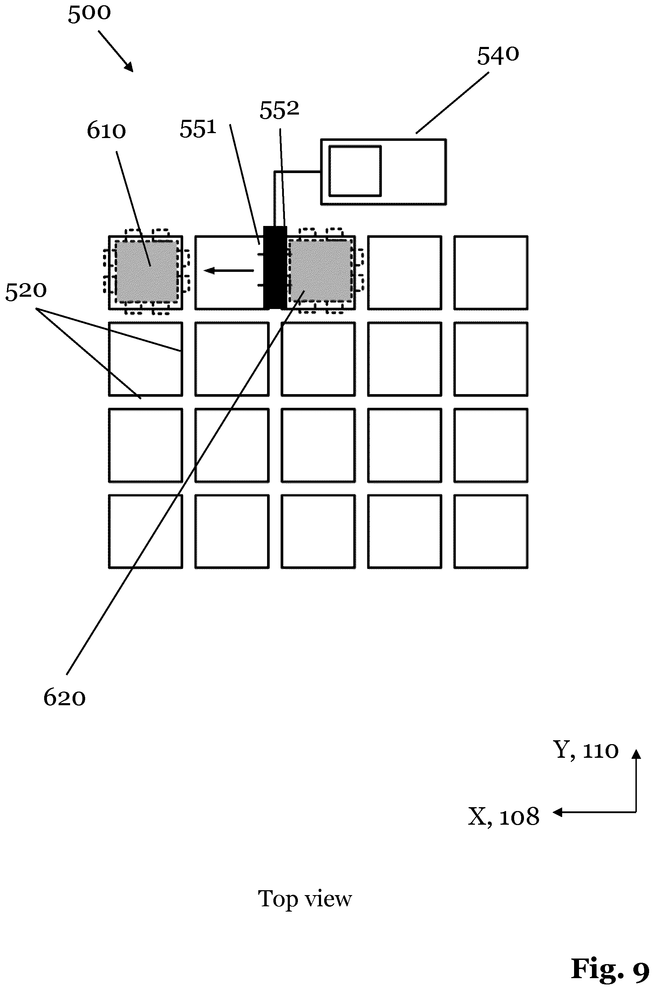

Turning now to Fig. 9, the charging of the first container handling vehicle 610 has finished and the first container handling vehicle 610 moves away from the first connector 551. Charging of the second container handling vehicle 620 may continue according to the charging profile of the second container handling vehicle 620, or the second container handling vehicle 620 may also move away from the second connector 552. Once either of the container handling vehicles 610, 620 have moved away from the connector unit 550, other container handling vehicles may now be charged in their vacated positions.

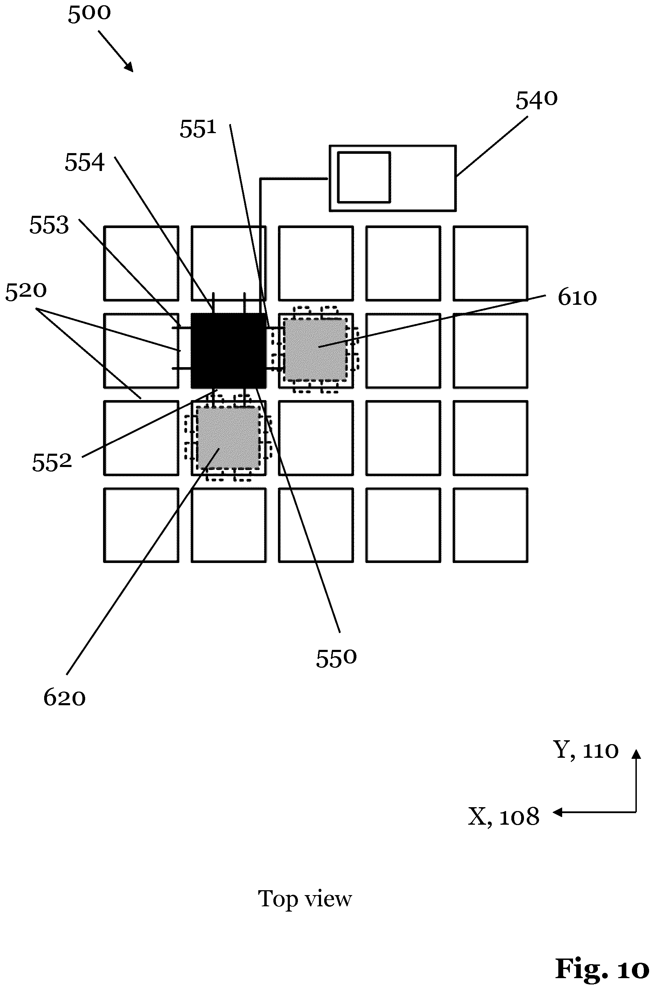

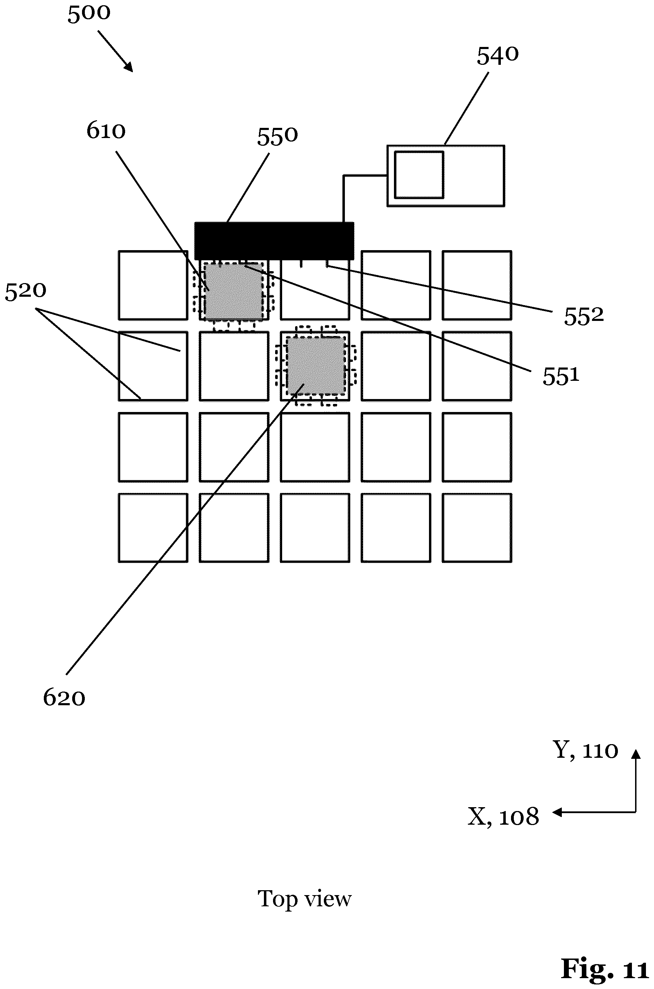

Whilst a connector unit 550 including two connectors 551, 552 has been shown, it will be appreciated that any plurality of connectors may be used. For example, and as shown in Fig. 10, the connector unit 550 may include a first connector 551, a second connector 552, a third connector 553, and a fourth connector 554. The connector unit 550 shown in Fig. 10 allows for the connection and simultaneous charging of up to four container handling vehicles each container handling vehicle approaching the connector from a different side. In the example shown in Fig. 10, the connector unit 550 uses up a single cell of the grid of the ASRS 500. A further example connector unit 550 is shown in Fig. 11 where the connector unit 550 is located along an edge of the grid of the ASRS 500. The connector unit 550 includes a first connector 551 and a second connector 552 each facing the same direction but located on a different column of the ASRS 500 grid. In this configuration, the connector unit 550 may extend to more columns of the grid and include a plurality of connectors.

### Charging Profiles

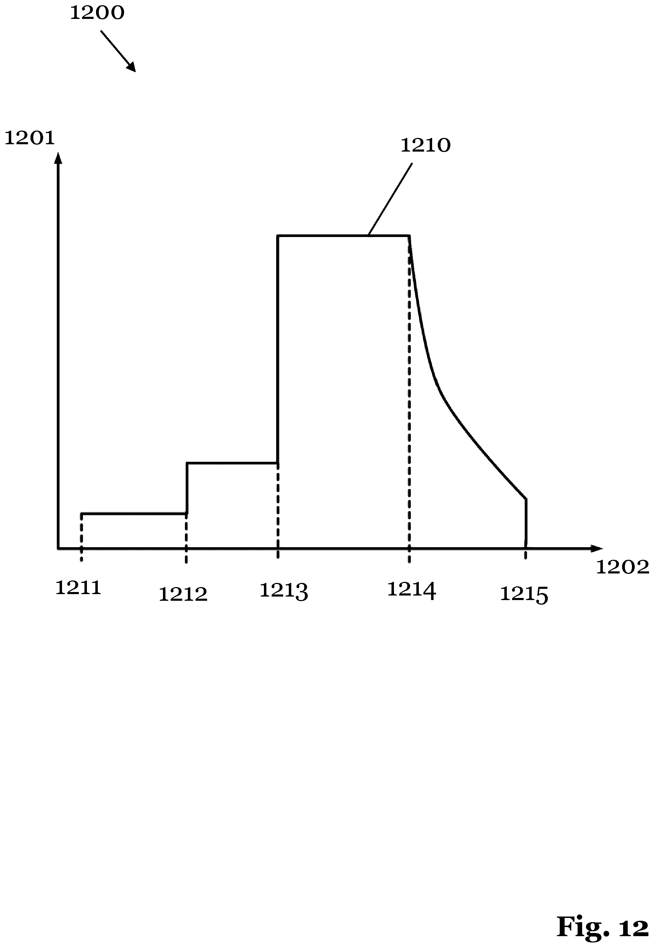

Fig. 12 shows an example of a charging profile 1200 that might be used to charge a battery. The example shown in Fig. 12 is an example only, and charging profiles may take many different forms. Charging profiles may be flat, follow a series of curves, follow different levels of power, or be responsive to battery condition such as temperature and battery health. The charging profile 1200 is shown on a graph which indicates a charging current on the y-axis 1201 and time on the x-axis 1202. At a first time 1211, an initial low current may be supplied to the battery. In this first time period it may be determined what the health and level of charge in the battery are likely to be by measuring the charging characteristics in response to the low current being supplied. This initial low current may also be used to verify that the charger is properly connected to the battery. At a second time 1212, a battery pre-charge may be applied to the battery. The battery -pre-charge may be done at a current greater than at the first time period, but a lower current level than the maximum charging level. At this time 1212 the battery may slowly warm up and begin charging slowly. At a third time 1213 the maximum charging current may be applied. During this time period 1213 the battery may be charged at a high rate and the battery may take on a majority of the energy during the charging process. At a fourth time 1214 the charging current may be gradually reduced so as to allow the battery to begin to gradually cool and slow the charging before the current is finally completely removed at a fifth time 1215. It will be appreciated that many different charging profiles may be used and may be beneficial. However, the example charging profile 1200 shows one option in which the charging profile may be suitably modified.

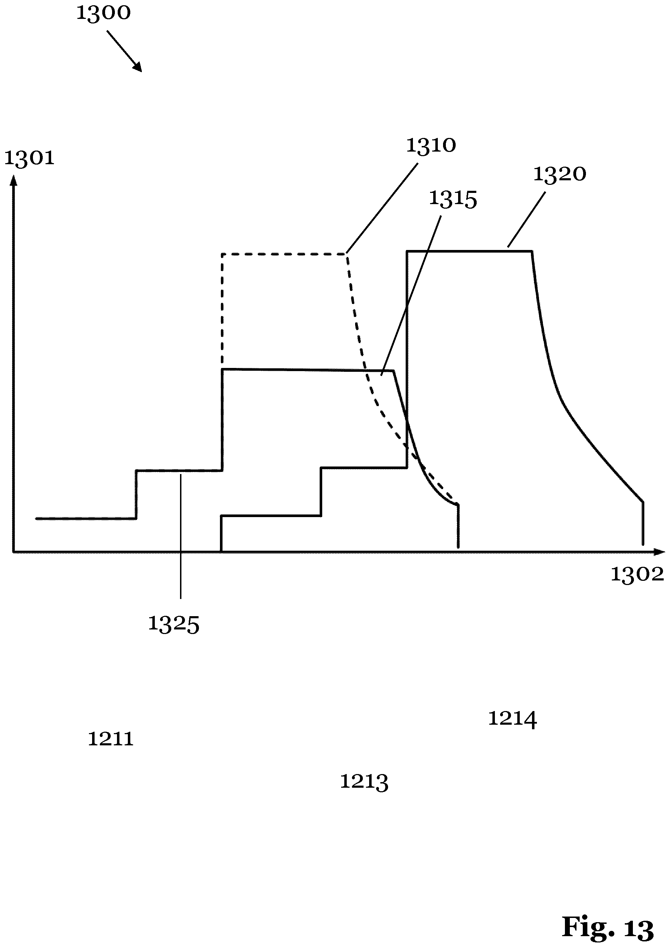

Fig. 13 shows an example of charging profiles 1300 where the charging profiles 1300 may be modified according to an example. The graph shows charging current on the y-axis 1301 and time on the x-axis 1302. The first charging profile 1310 is shown in broken lines and is the same as the first charging profile 1210 shown in Fig. 12. Without modification, the charging profile 1310 may continue as shown in Fig. 12. At some point during the first charging profile 1310 being executed, a request to charge a second container handling vehicle is received. The point at which the request is received may be at any point during the charging of the first container handling vehicle. However, an example point in time is shown in Fig. 13 as the point 1325 at which the second request is received. The example point 1325 is during the pre-charge phase of the first charging profile 1310. In response to receiving the request, the first container handling vehicle may be charged according to a modified first charging profile 1315. That is, the first charging profile 1310 is modified to produce a modified first charging profile 1315, and the modified first charging profile 1315 is used to charge the first container handling vehicle. As shown in Fig. 13, the modified first charging profile 1315 may have a lower peak current supplied to the battery. The time period over which the current is supplied to the first container handling vehicle may be shorter or longer than the time period for the first charging profile. The shape and/or form of the modified charging profile may be different than the first charging profile. The second container handling vehicle may then be charged according to a second charging profile 1320. It will be appreciated that in the examples shown in Fig. 13, the maximum current required to charge according to the modified first charging profile 1315 and the second charging profile 1320 in combination is less than the maximum current required to charge according to the first charging profile 1310 and the second charging profile 1320 in combination. In this way, the modification of the first charging profile 1310 may allow multiple container handling vehicles to be charged simultaneously without requiring that the power supply be capable of such high performance to supply both container handling vehicles irrespective of the desired charging profiles.

### Methods of Charging

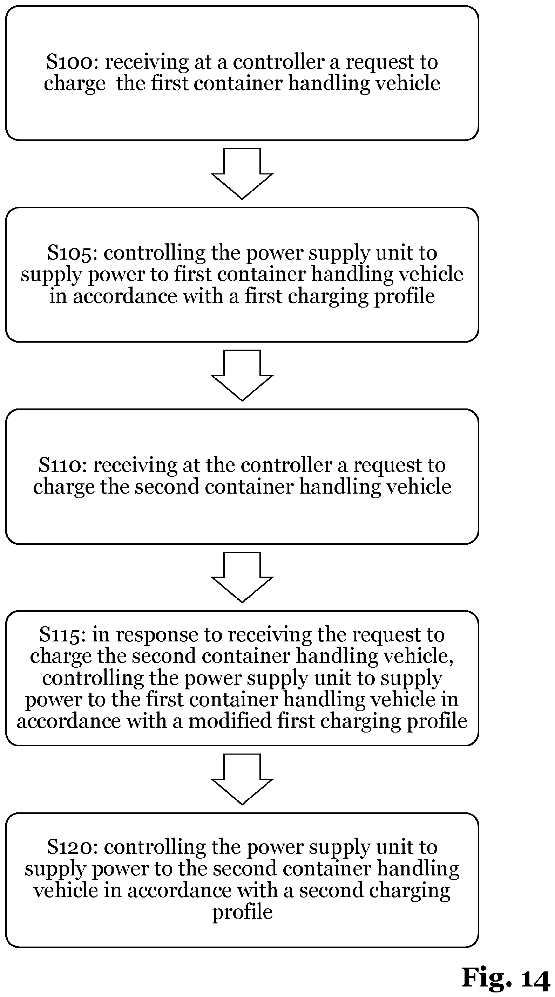

Fig. 14 shows a flowchart of a method of supplying power to a first container handling vehicle and a second container handling vehicle using a single power supply unit. The container handling vehicles and the single power supply unit may be those as described herein with reference to Figs. 1 to 11. The method includes S100: receiving at a controller a request to charge the first container handling vehicle, S105: controlling the power supply unit to supply power to first container handling vehicle in accordance with a first charging profile, S110: receiving at the controller a request to charge the second container handling vehicle, S115: in response to receiving the request to charge the second container handling vehicle, controlling the power supply unit to supply power to the first container handling vehicle in accordance with a modified first charging profile, and S120: controlling the power supply unit to supply power to the second container handling vehicle in accordance with a second charging profile.

In step S100, the request to charge the first container handling vehicle may be received at a system controller, or it may be received at a power supply controller. In either case, the controller may be adapted to control the power supply unit to charge container handling vehicles according to charging profiles. In step S105, the controller may control the power supply unit to supply power to the first container handling vehicle according to a first charging profile. The first charging profile may correspond to a diverse set of charging parameters, or it may be a simple defined charging power or current.

The first charging profile may therefore have a first charging current and a first time period for supplying the first charging current. The modified first charging profile may have a modified charging current and a modified time period for supplying the modified charging current. In this way, the charging current for the modified profile may be different, higher, or lower than the unmodified first charging profile. In a specific example the modified charging current is lower than the first charging current. In such instance, the total capacity of the power supply unit to provide charging current to container handling vehicles may be freed up to be able to charge multiple container handling vehicles simultaneously. In another specific example, the modified time period is longer than the first time period. By modifying the time period to be longer than the first time period in combination with providing a lower first charging current, the first container handling vehicle may be charged to the same capacity whilst allowing other container handling vehicles to be charged at the same time.

In another specific example, the modified time period is shorter than the first time period. In this way, charging of the first container handling vehicle may be shortened so that the power supply unit can be freed up for charging the second container handling vehicle or another container handling vehicle at the first connector. In another example, the modified charging current may be greater than the first charging current. By providing a greater modified charging current, the first container handling vehicle may be charged to the same capacity in a shorter time period so as to free up the power supply unit and first connector to charge the second container handling vehicle or another container handling vehicle at the first connector. The increased charging current may lead to faster degradation of the battery of the first container handling vehicle so that the ASRS may continue to operate at a high capacity according to the required utilisation of the container handling vehicles.

At the end of the modified time period, the first container handling vehicle may be controlled to move away from the power supply unit. This allows other container handling vehicles to move to the power supply unit in order to be charged. The first container handling vehicle and the second container handling vehicle may be charged at the same time. The modified first charging profile and the second charging profile may therefore overlap in time so that at least some of the charging of the first container handling vehicle and the second container handling vehicle occurs at the same point in time.

The charging profiles selected for each of the first container handling vehicle and the second container handling vehicle may be selected according to an assigned priority of each of the vehicles. For example, the first container handling vehicle may be assigned by the controller a first priority level. The second container handling vehicle may be assigned by the controller a second priority level. Where the first priority level and the second priority level indicate that charging of the first container handling vehicle is to be prioritised, the modified first charging profile may be configured to deliver a greater charge to the first container handling vehicle and the second charging profile may be configured to deliver a relatively lower charge to the second container handling vehicle, and vice versa. The relatively higher charge may be delivered by a high charging current and/or a high charging time, and the relatively lower charge may be delivered by a low charging current and/or a low charging time. The priority assigned to each container handling vehicle may be chosen based on the relative battery levels in each of the container handling vehicles. In this way, the controller may prioritise charging container handling vehicles that have a lower state of charge than other container handling vehicles. The priority assigned to each container handling vehicle may additionally or alternatively correspond to the tasks to be completed by each container handling vehicle. For example, a container handling vehicle preparing to complete more tasks or more energy-using tasks may be assigned a greater priority level than a container handling vehicle preparing to complete fewer tasks or less energy-using tasks.

When the supply of power to the first container handling vehicle has been stopped, for example when the first charging profile has been completed, the power supply unit may be controlled to supply power to the second container handling vehicle in accordance with a second modified charging profile. For example, the modified second charging profile may allow for a greater charging power or current than the second charging profile, accounting for the availability of more power from the power supply unit.

The charging profiles may be selected in response to other conditions which affect use of the power supply unit. For example, the time of day might affect the cost of electrical energy. At a time of day when the cost of electricity is low, the charging profile may be selected to deliver a large amount of charge to the container handling vehicles and at a time of day when the cost of electricity is high, the charging profile may be selected to deliver a small amount of charge to the container handling vehicles. By providing more charge to the container handling vehicles at times of day when the cost of electricity is low, the container handling vehicles may be allowed to lose charge when electricity is expensive and gain charge when electricity is cheap. The threshold for determining the modified first charging profile may therefore be determined either based on the capacity of the power supply unit to provide a maximum total charging current, or the threshold may be determined to be lower than the maximum total charging current at certain times of day.

The charging profiles may be selected in response to a utilisation metric of the ASRS. For example, when usage of the ASRS is relatively high, the utilisation metric may be high, and when utilisation of the ASRS is relatively low, the utilisation metric may be low. Utilisation of the ASRS may be determined by the number of tasks being carried out, the amount of downtime without tasks for each container handling vehicle, or any other suitable measurement. When the utilisation metric is low, indicating low usage of the ASRS, the charging profiles may be selected to deliver relatively greater charging power to the container handling vehicles and when the utilisation metric is high, indicating high usage of the ASRS, the charging profiles may be selected to deliver relatively lower charging power to the container handling vehicles. In this way, charging of the container handling vehicles may be reserved for times when the ASRS is not under high utilisation or high load and the charging of vehicles will be less likely to affect operations.

The request to charge a container handling vehicle may be a request sent from the container handling vehicle to the controller, or the request may be initiated by the presence of a container handling vehicle at a charging location, or a charging connector. A container handling vehicle may pre-emptively request charging when it is known that the container requires charging, or the controller may determine that a container handling vehicle should be charged. The container handling vehicle in this case may poll the controller to let the controller know that charging is or will be required. The controller may determine that the container handling vehicle may be charged now, or at a later time.

A presence sensor in the charging location might indicate that a container handling vehicle has arrived to be charged and therefore initiate the request. The presence sensor may include any of a contact switch, a mechanical switch, a non-contact switch, or a continuity sensor on the electrical contacts of the charging connector.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for supplying power to a first container handling vehicle and a second container handling vehicle using a single power supply unit, the method comprising:
receiving at a controller a request to charge the first container handling vehicle,
controlling the power supply unit to supply power to first container handling vehicle in accordance with a first charging profile,
receiving at the controller a request to charge the second container handling vehicle, and
in response to receiving the request to charge the second container handling vehicle, controlling the power supply unit to supply power to the first container handling vehicle in accordance with a modified first charging profile, and
controlling the power supply unit to supply power to the second container handling vehicle in accordance with a second charging profile.

2. The method according to claim 1, wherein the first charging profile comprises a first charging current and a first time period for supplying the first charging current, and wherein the modified first charging profile comprises a modified charging current and a modified time period for supplying the modified charging current, and optionally wherein the modified charging current is lower than the first charging current, and optionally wherein the modified time period is shorter than the first time period.

3. The method according to claim 2, further comprising, at the end of the modified time period, controlling the first container handling vehicle to move away from the power supply unit.

4. The method according to any preceding claim, wherein the step of controlling the power supply to supply power to the first container handling vehicle in accordance with a modified first charging profile and controlling the power supply unit to supply power to the second container handling vehicle in accordance with a second charging profile are performed concurrently.

5. The method according to any preceding claim, further comprising
assigning a first priority level to the request to charge the first container handling vehicle, and
assigning a second priority level to the request to charge the second container handling vehicle, and wherein
the modified first charging profile and the second charging profile are selected according to the first priority level and the second priority level.

6. The method according to claim 5, wherein the first priority level indicates a higher priority than the second priority level, and wherein
the modified first charging profile is selected to deliver a relatively high charging current to the first container handling vehicle, and
the second charging profile is selected to deliver a relatively low charging current to the second container handling vehicle; or
wherein the first priority level indicates a lower priority than the second priority level, and wherein
the modified first charging profile is selected to deliver a relatively low charging current to the first container handling vehicle, and
the second charging profile is selected to deliver a relatively high charging current to the second container handling vehicle.

7. The method according to any preceding claim, further comprising
stopping the supply of power to the first container handling vehicle, and
controlling the power supply unit to supply power to the second container handling vehicle in accordance with a modified second charging profile.

8. The method according to any preceding claim, wherein
the modified first charging profile and the second charging profile are selected in response to a time of day, and optionally wherein the total power supplied according to the modified first charging profile and the second charging profile is below a predetermined threshold at a first time of day, and wherein the total power supplied according to the modified first charging profile and the second charging profile is above the predetermined threshold at a second time of day different from the first time of day.

9. The method according to any preceding claim, wherein
the modified first charging profile and the second charging profile are selected in response to a utilisation metric of an automated storage retrieval system in which the first container handling vehicle and the second container handling vehicle are operating, and optionally wherein the total power supplied according to the modified first charging profile and the second charging profile is below a predetermined threshold at a first value of the utilisation metric, and wherein the total power supplied according to the modified first charging profile and the second charging profile is above the predetermined threshold at a second value of the utilisation metric; and optionally
wherein the utilisation metric is indicative of a rate of container handling vehicle operations being performed in the automated storage and retrieval system.

10. The method according to any preceding claim, wherein the power supply unit comprises a first charging location and a second charging location, each of the first and second charging locations configured to receive a container handling vehicle for charging.

11. The method according to any preceding claim, wherein receiving at the controller a request to charge the first container handling vehicle comprises detecting, by a first sensor, the presence of the first container handling vehicle in a first charging location of the power supply unit and wherein
receiving at the controller a request to charge the second container handling vehicle comprises detecting, by a second sensor, the presence of the second container handling vehicle in a second charging location of the power supply unit.

12. An automated storage and retrieval system comprising a power supply unit, a first container-handling vehicle, a second container handling vehicle, a power supply unit, and a controller configured to control the first container handling vehicle, the second container handling vehicle and the power supply unit, wherein the controller is configured to carry out the method according to any of claims 1 to 11.

13. The automated storage and retrieval system of claim 12, wherein the power supply unit comprises a first charging location and a second charging location, and wherein the first charging location is located on a first side of the power supply unit and the second charging location is located on a second side of the power supply unit opposite to the first side.

14. A computer readable medium storing instructions that when executed cause an automated storage and retrieval system container to perform the method according to any of claims 1 to 11.
